# EUROPEAN PATENT APPLICATION

(11) **EP 1 702 709 A1**
(43) Date of publication of application: **20.09.2006**
(21) Application number: 06251180.3
(22) Date of filing: 06.03.2006
(51) Int. Cl.: B23K 20/02, F01D 5/30, B23P 15/00, F01D 9/04, B23K 37/06, B23K 101/00, B23K 103/14

(54) **Assembly and method of manufacture of a component by hot isostatic pressing using tooling pieces for creating a cavity with the parts of the component**

(30) Priority: 17.03.2005 GB 0505568
(71) Applicant: Rolls-Royce plc, London SW1E 6AT (GB)
(72) Inventor: Tonks, Robert Charles, Somerset TA6 7EG (GB); Voice, Wayne Eric, Nottingham NG2 5JG, (GB); Wu, Xinhua, Birmingham B31 2BE (GB); Loretto, Michael, Birmingham B15 3UG (GB); Samarov, Victor LNT PM Inc., California 92841 (US)
(74) Representative: Bird, Vivian John

(57) **Abstract**

The present invention describes an assembly for manufacture of a component by hot isostatic pressing comprises a first workpiece (4') and a second workpiece (6') and a method of manufacturing a component using such an assembly. The first workpiece (6') and second workpiece (4') are assembled to define a cavity (28). Removable tooling pieces (30,31) are provided to the assembly which further define the cavity (28) and which are shaped to apply a forging load to a powder (26) within the cavity (28) during hot isostatic pressing.

## Description

The present invention concerns an assembly for a component manufactured under hot isostatic pressure from a number of workpieces and metal powder, and the method of manufacture therefore. The present invention particularly concerns integrally bladed discs for gas turbine engines, also known as blisks, and their manufacture.

Gas turbine engines suitable for aircraft often use axial flow compressors to compress a working fluid, and axial flow turbines to recover work from the fluid after it has been heated. Each comprise an annular array of aerofoil shaped elements, called blades, attached to a central body comprising a circular ring, or more commonly, disc. The blades are typically mechanically attached to the central body which increases disc weight.

As a result, non-mechanical methods of joining the blades to the central body have been proposed, notable of which is an integrally bladed disc, or "blisk", of unitary construction wherein the disc and blade are machined from a single forging. These are very expensive. Another proposal is a disc with linear friction welded blades, wherein blades are linear friction welded to a disc by reciprocating linear motion of the blades relative to the disc. Although this method of manufacture is some 20% cheaper than a blisk of unitary construction, it is still an expensive method of manufacture.
Furthermore, it necessitates large and expensive machinery.

Another method, disclosed in US 4,485,961 comprises a component assembled from a first and second workpiece joined via an interference fit. The join is then covered in first layer of metal powder, and a first and second layer of glass powder and hot isostatically pressed. The fused glass is subsequently removed.

The disadvantage of this method is that it requires complex machining of the features for the interference join. Furthermore, it is difficult to control the shape of the consolidated metal powder, necessitating further complex machining of the product after the hot isostatic process is complete.

There is a requirement then to provide an integrally bladed disc without the inherent material wastage of a machined-from-solid blisk, without the large set up costs associated with linear friction welded bladed discs, and which minimises and simplifies the number of operations, in particular machining, before and after the method of manufacture.

According to the present invention, there is provided an assembly for manufacture of a component by hot isostatic pressing comprising a first workpiece and a second workpiece, the first workpiece and second workpiece arranged to define a cavity, wherein the assembly comprises removable tooling pieces which further define the cavity and which are shaped to apply a forging load to a powder within the cavity during hot isostatic pressing.

Preferably, the tooling pieces are shaped to abut one another such that relative movement is directed in a radial direction relative to the first workpiece.

Preferably, the tooling pieces are made from a material with a greater rate of thermal expansion than that of the first workpiece or second workpiece.

Preferably, the tooling pieces are provided with a coating which prevents bonding between the tooling pieces and the component under hot isostatic pressure.

Preferably the powder has a particle size not greater than 250 microns.

Preferably, the powder is supplied to the assembly partially consolidated as a preform.

Preferably, this preform has a density of at least 67%.

Preferably, the preform is shaped to form a location feature for at least one of the first or second workpiece.

Preferably the preform is consolidated during hot isostatic pressing to produce a union piece between the first workpiece and second workpiece, wherein the preform is supplied to the cavity as a partially consolidated preform of similar shape to the finished union piece, but oversized such that consolidation of the preform under hot isostatic pressing results in a union piece of the required dimensions.

Preferably, a plurality of second workpieces are provided about the first workpiece, assembled so that each second workpiece defines a cavity between each second workpiece and the first workpiece, wherein each cavity is provided with powder, and the removable tooling pieces are provided about each second workpiece to further define each cavity and to apply a forging load to the powder within each cavity during hot isostatic pressing.

Preferably the assembly is for the manufacture of an integrally bladed disk for a gas turbine engine, wherein the first workpiece comprises a disk, and the second workpiece comprises a blade, and in which the cavity is shaped such that hot isostatic pressing of the assembly consolidates the powder to form a radiussed fillet joint between the disk and blade.

According to a further aspect of the present invention there is provided a method of manufacturing a component comprising a first workpiece joined via a union piece to a second workpiece, using the assembly of claim 1, comprising, assembling the first workpiece and second workpiece to form an assembly defining a cavity therebetween, supplying a powder to the cavity, applying hot isostatic pressure to the assembly such that the powder is consolidated to form the union piece of the component, and to bond the powder to the first component, and to the second component wherein the method comprises the further step of supplying the assembly with removable tooling pieces which further define the cavity, and which are shaped to apply a forging load to the cavity during the application of hot isostatic pressure to the assembly.

The present invention will now be described in more detail with reference to the accompanying drawings, in which:
Figure 1 shows a cross-section through a gas turbine compressor blisk according to the present invention;
Figure 2 shows a perspective view of the blisk of Figure 1, and in particular, a union used in the method of manufacture;
Figure 3 shows a cross-section through a blisk assembly according to a first stage in the method of manufacture of the compressor blisk of Figures 1 and 2;
Figure 4 shows a plan view of the blisk assembly of Figure 3; and
Figure 5 shows a second stage in the method of manufacture of the blisk of Figure 1.

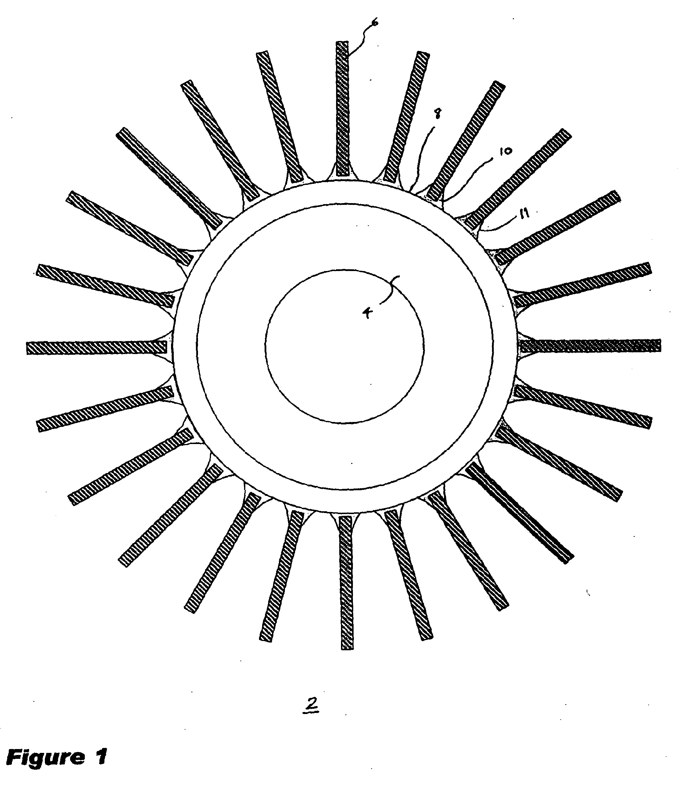

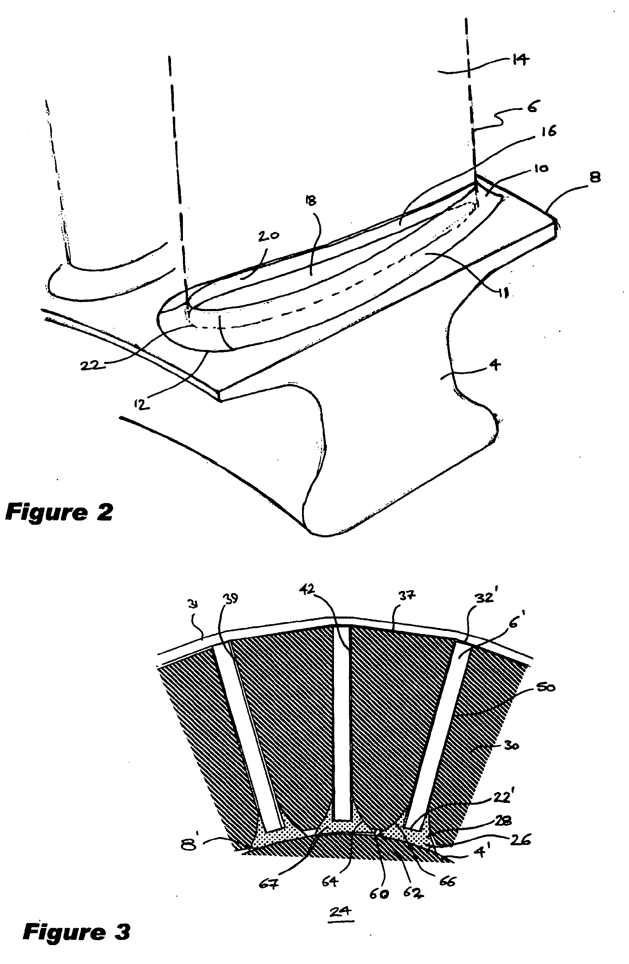

Turning to Figure 1, a compressor blisk 2 comprises a central workpiece, cylindrical disc 4, manufactured from a titanium alloy forging, in the present example Ti6/4. A number of second workpieces, aerofoil blades 6 forged from the same titanium alloy, are attached to the disc 4, distributed evenly about the radially outer surface 8 of the disc and projecting radially therefrom. Each blade 6 is attached to the disc 4 via a union piece 10, consolidated from a powdered titanium alloy, in the present case Ti6/4, with particle sizes, before consolidation, of about 250 micron or less. Each union piece 10 provides a blended, radiussed fillet joint 11 between the disc 4 and each blade 6. In the present example, this joint 11 has a mean radius of about 5mm. The union piece 10 extends around the entire blade section, as will be understood if reference is now made to Figure 2 which shows a perspective view of a section of the assembly of Figure 1, with the aerofoil blade 6 shown in dashed outline for better visibility of the union piece 10.

Each union piece 10 comprises a piece of titanium alloy with similar properties to a forged item of the same material, the base of which defines a lower surface 12 which conforms with the outer surface 8 of the disc 4, and defines a footprint of similar shape to the compressor blade 6 cross-section but of larger area, by at least 100%. The union 10 tapers upwards and inwards from this footprint to a height of about 5mm from the base, at which height it blends with the external gas-washed surface 14 of the aerofoil 6, with minimal step. The taper is shaped to forms the radiussed fillet joint 11 between each blade 6 and the disc 4. Such joints 11 are well known in the art and serve to reduce stresses at the blade/disc interface.

The union 10 is centrally relieved to provide a blind socket 16, with a base 18 and sidewalls 20, having a cross-section substantially identical to the external blade 6 cross-section. The socket 16 forms a close-fitting location feature to receive the blade 6, which is diffusion bonded to the union 10; The base 22 of the blade is diffusion bonded to the socket base 18, and the blade gas-washed surfaces 14 are diffusion bonded to the socket sidewalls 20. The base 12 of the union 10 is diffusion bonded to the disc surface 8.

The high quality diffusion bond between each blade 6 and each union 10 and between each union 10 and the disc 4 provides a blisk 2 of monolithic, unitary construction as provided by the prior art, however, the blisk provides the advantage over the prior art that the separate, intermediate union piece 10 between blade 6 and disc 4 provides the complex fillet joint 11 geometry, and so simplifies the geometry of blades 6 and disc 4 prior to manufacture. This eliminates the need to manufacture location features into the disc outer surface to receive the blades, and complex stress reduction features at the base of the blades. Instead, the external surface 8 of the disc can be made axisymmetric, enabling manufacture by simple 2-axis machining. For the same reasons, the blades 6 can be formed of constant section.

Figure 3 shows a cross section through part of an assembly 24 used in a first stage of the manufacture of the blisk 2 of Figure 1 and Figure 2. The assembly 24 comprises a forged titanium disc 4', an annular array of forged titanium aerofoil blades 6', and titanium powder 26 supplied to the cavity 28 formed between each blade 6' and the disc 4'. Each cavity 28 is defiried by the base 22' of each blade 6', by the disc surface 8', and by removable tooling pieces 30 which occupy the region between adjacent blades 6'. The assembly is enclosed within a mild steel bag 31

The disc 4' has an outer surface 8', tapered in the axial direction such that the disc diameter increases from front to back to form a flattened frustoconic. The outer surface 8' of the disc is axis-symmetric with the benefit that the surface can be formed relatively simply by a turning operation. The outer surface 8' is prepared, prior to assembly, so that it is suitable for diffusion bonding, by machining away the oxide layer and then washing the machined surface in a degreasant such as acetone.

The aerofoil blades 6' are also manufactured from titanium forgings with substantially constant aerofoil cross-section, twisted so that the angle of incidence of each blade 6' decreases with radial distance from the disc 4'. The base 22 of each blade 6' is shaped to lie parallel to the outer surface 8' of the disc 4', and is prepared, prior to assembly, so that it is suitable for diffusion bonding by the same method described for the disc surface 8'.

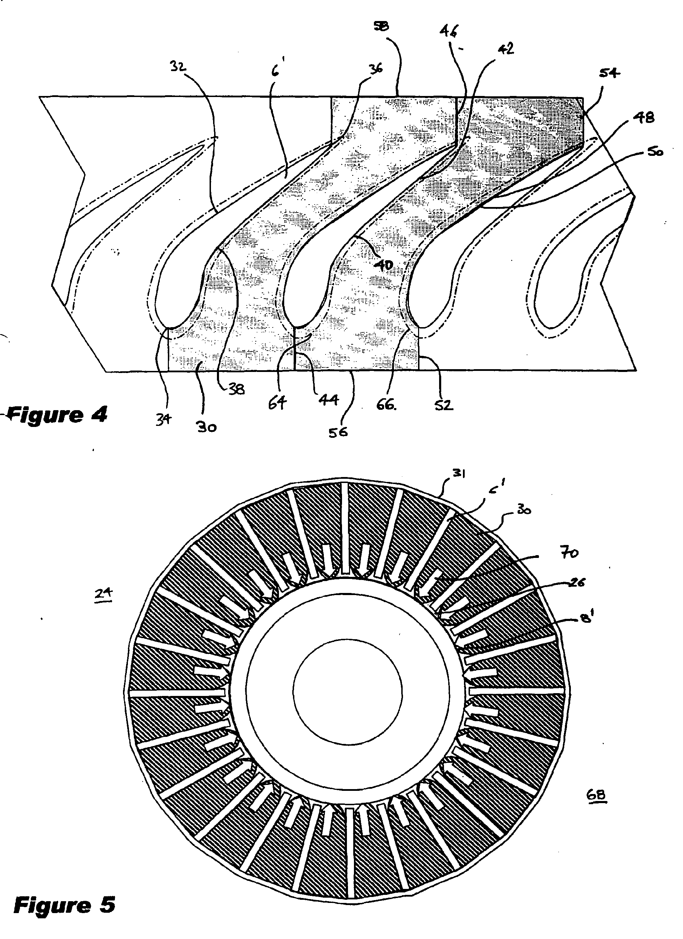

The tooling pieces 30 comprise mild steel wedges, shaped to conform to the region between adjacent blades 6'. This will be understood better if reference is also made to Figure 4 which shows a plan view of part of the assembly 24 of Figure 3.

Each blade 6' comprises a convex suction surface 32 which extends from a leading edge 34 to a trailing edge 36 and radially between the blade base 22' and blade tip 32', and a concave pressure surface 38 which extends from the leading edge 34 to the trailing edge 36 and radially between the blade base 22' and blade tip 32'.

Each tooling piece 30 comprises a block of mild steel, provided with a boron nitride coating 39, which extends axially forward of the blade leading edge 34 and axially aft of the blade trailing edge 36, and which extends radially between the disc surface 8' and an outer arcuate surface 37 which lies flush with the blade tips 32' to occupy substantially the whole volume between blades 6'. With the tooling pieces 30 in place, the assembly 24 forms a substantially solid disc with outer diameter equal to the blade tip diameter.

In plan, each tooling piece 30 has four faces. A first side face 40 comprises a convex blade engagement surface 42, a forward abutment surface 44 and an aft abutment surface 46. The blade engagement surface 42 is shaped to closely conform to the pressure surface 38 of a blade 6' while the abutment surfaces 44,46 are substantially planar. Due to the orientation of the blade 6' the first and second abutment surfaces 44,46 are offset.

A second, opposite side face 48 of each tooling piece 30 comprises a concave blade engagement surface 50, a forward abutment surface 52, and an aft abutment surface 54. The blade engagement surface 50 is shaped to closely conform to the suction surface 32 of a second, adjacent blade 6'. Abutment surfaces 52,54 compliment abutment surfaces 44,46.

The remaining front face 56 and rear face 58 comprise planar surfaces which run parallel to the disc 4'axis.

The first and second side faces 40,48 of each tooling piece 30 are tapered to form a wedge which narrows in the direction of the disc surface 4'. The radially inner surface 60 of this wedge is truncated and relieved to provide three distinct forging surfaces 62,64,66. A central concave surface 62 is shaped to conform to the region of the disc surface 8' which lies between blade fillet joints 11 in the finished blisk 2. To each side of this central region is a convex surface. A first convex surface 64 extends around the base of the first side face 40. This region is shown as a dashed line in Figure 3 for clarity. A second convex surface 64 extends around the base of the second side face 48.

Hence in the assembly of Figures 3 & 4, adjacent tooling pieces 30 abut one another via first and second abutment surfaces 44,46,52,54 located fore and aft of the blades 6'. At the same time, each blocks 30 abuts the pressure surface of a first blade 6' via convex blade engagement surface 42, and the suction surface of an adjacent blade 6' via concave blade engagement surface 50. The radially inner convex surfaces of adjacent blocks, 64,66 define, in conjunction with the disc outer surface 8' and blade base 22', a cavity 28 which is similar in shape to the union piece 10 of the finished blisk 2, but which is of about 50% greater volume, ie 15% larger in each dimension than the dimensions of the finished union 10. A metal powder 26 comprising Ti/Al 4-6 is supplied to this cavity so that the cavity is filled to a density of 67% by weight of the material.

In a preferred embodiment of the present invention, the metal powder 26 is supplied as a 'partially-consolidated' preform 67, with solid-like properties, but with a material density of about 67%. This has the advantage that the powder 26 can be handled as a unitary element, and ensures that the cavity 28 is correctly filled without any settling, as can occur with loose powder, and which would tend to lead to material inconsistencies after a forging process is applied.

The preform 67 defines a socket 16', of the same dimensions as the socket 16 of the finished blisk which facilitates location of the preform 26 within the interface 28 by location about the base 22' of the blade 6'.

Preferably, the partially consolidated preform 67 is manufactured by cold compaction of a metal powder, but sintering may also be used. Binding agents should be avoided as they interfere with the hot isostatic pressing process.

The mild steel bag 31 comprises a drum-like structure which fully encloses the assembly 24 and which wraps around, and abuts the blade tips 32' and outer surfaces 37 of the workpieces 30 and which encloses and abuts the front and rear face 56,58 of the assembled workpieces 30, and front and rear face of the disc 4'. The bag is of as 2mm thickness and is evacuated prior to sealing about the components of the blisk assembly 24.

Figure 5 shows, schematically, a cross-section through the assembly 24 of Figures 3 & 4 in a second stage in the manufacture of the blisk 2. The blisk assembly 24 is placed in an oven (not shown) and surrounded by an inert gas 68 under pressure. The pressure of the inert gas 68 is increased to between 100 and 150 MPa, and its temperature raised to between 920 and 930°C. The assembly 24 is kept at these conditions for about four hours, during which time, the inward pressure generated by the inert gas 68 on the steel bag 31 forces the blades 6' and tooling pieces 30 radially inwards. The abutting arrangement of the tooling pieces ensures that the load applied to the assembly 24 is directed radially inwards, with a minimum amount of load applied to the interleaved blades 6'. Hence the forging surfaces 62,64,66 of the tooling pieces 30, and the base 22' of the blades compress the preform 67 radially inwards, to apply a forging force, denoted by arrows 70, to the metal powder 28 of the preform 67. The forging force 67 further consolidates the preform to give a fully dense union piece 10 with 'wrought' properties, and diffusion bonds the metal powder 28 to the base 22' of blades 6', and to the outer surface 8' of disc 4'. Hence the process results in fully dense union pieces 10, bonded to the disc 4 and blades 6, as described hereinbefore with reference to Figures 1 and 2. The shape of the concave forging surfaces 64,66 defines the convex radiussed profile of the fillet joint 11 formed by the finished union piece 10.

This application of pressure and temperature to a component is well known in the art as hot isostatic pressing, and it will be understood that the variables of pressure and temperature will be varied according to the materials used, and the amount of consolidation required to produce a union piece 10 with practically 100% density.

After the hot isostatic pressing, the mild steel bag 31 is mechanically removed from the blisk assembly 24 shown in Figure 3. The mild steel workpieces 30 are then removed from the assembly. Their removal is eased by the boron nitride coating 39, and by the thermal contraction of the mild steel material, which is greater than the thermal contraction of the titanium alloy from which the blisk 2 is made due to the higher coefficient of thermal expansion of mild steel relative to the titanium alloy used.

This arrangement has the advantage over the prior art that the tooling pieces 30 eliminate the need to surround the assembly in a disposable sealant such as glass prior to hot isostatic pressing, and are reusable, reducing cost, and making the process more repeatable.

Finally, the blisk is 2 dressed to remove any surface impurities, and final machining processes are carried out to ensure dynamic balance of the blisk 2.

It will be understood by persons skilled in the art that the above description is only an example of the present invention and not intended to limit the scope of the invention. For example, the present invention is also well suited for the manufacture of fan blisks for gas turbine engines, with hollow blades manufactured by superplastic forming and diffusion bonding, as opposed to the solid blades 6 described herein. Similarly, the present invention is well suited to the manufacture of turbine .blisks in which cooling passages are necessary between blade and disc. In such an application, the preconsolidated form 67 used to form the union piece is provided with a number of cooperating holes between blade and disc, and reinforcement means such as ceramic tubes to prevent closure of the holes during consolidation. Also, in the manufacture of such turbine blisks, different materials are used in the construction, notably high nickel 'super alloys'.

It will also be understood that, although it is preferable to use preconsolidated forms 67 to supply powder to the cavity 28 between disc 4' and blade 6' it is also possible to use metal powder 26. Where this is the case, provisions are made in the tooling pieces 30 for supply of the powder 28 after the assembly 24 is completed, and the cavity 28 defined. Similarly, where it is not convenient to manufacture the preconsolidated form 67 from a single piece, it is possible to supply the form 67 as a number of pieces which consolidate during the manufacturing process.

It will also be understood that although the present example cites a disc 4 and blades 6 with simple geometry, the method of manufacture is also well suited to discs with more complicated surface geometries, and to '3-d' blade geometries, wherein the aerofoil section of the blade varies continuously along its length.

It is not intended that the process is limited to one in which all the workpieces are manufactured from the same alloy. Where necessary, such as in the example of a turbine blisk, the turbine blades may be cast from a high nickel, single crystal superalloy for temperature capability, while the disc material is made from a titanium alloy.

## Claims

1. An assembly for manufacture of a component by hot isostatic pressing comprising a first workpiece and a second workpiece, the first workpiece and second workpiece arranged to define a cavity, wherein the assembly comprises removable tooling pieces which further define the cavity and which are shaped to apply a forging load to a powder within the cavity during hot isostatic pressing.

2. An assembly as claimed in claim 1 wherein the tooling pieces are shaped to abut one another such that relative movement is directed in a radial direction relative to the first workpiece.

3. An assembly as claimed in claim 1 wherein the tooling pieces are made from a material with a greater rate of thermal expansion than that of the first workpiece or second workpiece.

4. An assembly as claimed in claim 1 wherein the tooling pieces are provided with a coating which prevents bonding between the tooling pieces and the component under hot isostatic pressure.

5. An assembly as claimed in claim 1 wherein the powder has a particle size not greater than 250 microns.

6. An assembly as claimed in claim 1 wherein the powder is supplied to the assembly partially consolidated as a preform.

7. An assembly as claimed in claim 6 wherein the preform has a density of at least 67%.

8. An assembly as claimed in claim 6 wherein the preform is shaped to form a location feature for at least one of the first or second workpiece.

9. An assembly as claimed in claim 6 wherein the preform is consolidated during hot isostatic pressing to produce a union piece between the first workpiece and second workpiece, wherein the preform is supplied to the cavity as a partially consolidated preform of similar shape to the finished union piece, but oversized such that consolidation of the preform under hot isostatic pressing results in a union piece of the required dimensions.

10. An assembly as claimed in claim 1 wherein a plurality of second workpieces are provided about the first workpiece, assembled so that each second workpiece defines a cavity between each second workpiece and the first workpiece,
wherein each cavity is provided with powder, and the removable tooling pieces are provided about each second workpiece to further define each cavity and to apply a forging load to the powder within each cavity during hot isostatic pressing.

11. An assembly as claimed in claim 1 for the manufacture of an integrally bladed disk for a gas turbine engine, wherein the first workpiece comprises a disk, and the second workpiece comprises a blade, and in which the cavity is shaped such that hot isostatic pressing of the assembly consolidates the powder to form a radiussed fillet joint between the disk and blade.

12. A method of manufacturing a component comprising a first workpiece joined via a union piece to a second workpiece, using the assembly of claim 1, comprising,
assembling the first workpiece and second workpiece to form an assembly defining a cavity therebetween,
supplying a powder to the cavity,
applying hot isostatic pressure to the assembly such that the powder is consolidated to form the union piece of the component, and to bond the powder to the first component, and to the second component
wherein the method comprises the further step of supplying the assembly with removable tooling pieces which further define the cavity, and which are shaped to apply a forging load to the cavity during the application of hot isostatic pressure to the assembly.
